# EUROPEAN PATENT SPECIFICATION

(11) **EP 1 235 477 B1**
(45) Date of publication and mention of the grant of the patent: **25.01.2006**
(21) Application number: 00977607.1
(22) Date of filing: 02.11.2000
(51) Int. Cl.: A01D 43/10

(54) **A LOAD ADAPTIVE FLOTATION ARRANGEMENT FOR A MOWER**
LASTENADAPTIVES FLOTATIONSSYSTEM FÜR MÄHER
DISPOSITIF COMPENSATEUR DE CHARGE FLOTTANT POUR FAUCHEUSE

(30) Priority: 04.11.1999 FI 992380
(43) Date of publication of application: 04.09.2002
(73) Proprietor: Oy El-Ho Ab, 68910 Bennäs (FI)
(72) Inventor: MYLLYMÄKI, Jari, FIN-68640 Savonkylä (FI); CHARPENTIER, Harri, - (FI); NYLUND, Bengt, FIN-68620 Jakobstad (FI); HÄGGBLOM, Karl-Erik, FIN-67600 Karleby (FI)
(74) Representative: Niemi, Hakan Henrik
(86) International application number: PCT/FI2000/000966
(87) International publication number: WO 2001/031994

(56) References cited:
- EP-A1- 0 861 581
- WO-A1-91/11099
- WO-A1-99/09805
- US-A- 4 724 661

## Description

The present invention relates to an arrangement for load-compensated balancing of an agricultural mowing machine. This machine consisting of a mowing unit equipped with a knife unit and a conditioner, supported by a spring suspension in a carrier frame, in which the mowing unit is attached to the carrier frame by at least two guide arms and is supported by at least three spring elements acting between the mowing unit and the carrier frame. The machine further has at least one spring element comprising a hydraulic cylinder, a pneumatic cylinder or a bellows being situated in front of a gravity centre of the mowing unit, as well as at least one spring element situated rear of a gravity centre of the mowing unit in a direction of travel of the mowing machine, the spring element having means controlling the pressure and thus the lifting force thereof. The lifting force of the cylinder compensating for the additional loading to which the mowing unit is subjected when cutting crops.

There are many solutions to the problem of balancing a mowing machine by supporting it in a carrier frame using various types of spring suspension. The Swiss patent application No. 510 975 (Bucher-Guyer, 1969) may justifiably be regarded as one of the most fundamental, especially in the case of the towed mowing conditioners used today. The mowing machine described in this case is equipped with disc rotors, the mowing unit being supported by a spring suspension relative to a carrier frame provided with wheels. Bucher-Guyer's mowing unit is connected to the main frame by means of rigid guide arms. The patent shows different versions of these guide arms, some of which permit the mowing beam to pivot about a shaft which is essentially perpendicular to the direction of travel as it moves upward and downward following irregularities in the ground, while others maintain the angle of the mowing unit constant relative to the carrier frame. The latter type is usually referred to in everyday terms as a parallelogram suspension. The guide arms shown in the Bucher-Guyer patent are rigid and attached to the main frame in such manner that they fix the lateral position of the mowing unit relative to the carrier frame.

A similar arrangement is presented in the publication WO 99/09805 (Van der Lely & Korn, 1997), the cutting tools and the conditioner unit being supported by spring elements from allowing a lateral positioning of the cutting tools and conditioner unit due to changing under laying ground conditions.

Another patent which is often quoted in this context is US 4 724 661 (Blakeslee. 1986). In principle, this builds further on the same concept as that advanced earlier by Bucher-Guyer., although compared with the earlier solution. The Blakeslee machine is provided with a sprung intermediate frame between the mowing unit and the main frame proper. Thus, Blakeslee has divided the upward and downward spring movement into two part movements., mainly to reduce the movement of the mowing beam relative to the conditioner without thereby reducing the total spring travel of the mowing beam. The connection shown in Blakeslee between the mowing unit and the intermediate frame, and between the intermediate frame and the main frame, consists of a parallelogram suspension with rigid guide arms.

US patent 4 719 742 (Ermaco, priority from 1984) shows essentially how two small mowing units can be combined to create a wide machine. However, it also proposes a slightly different system for balancing the mowing units themselves. As proposed in Ermaco. the main carrier frame is sprung relative to the driving wheels, while the mowing unit itself is free to pivot about an essentially horizontal shaft perpendicular to the actual direction of travel (see, for example, patent claim 14). Ermaco also proposes rigid guide arms connecting the mowing unit to the main frame.

PCT patent application WO 91/11099 (Lauritsen, 1990) actually proposes a combination of the three abovementioned patents. In this case, Lauritsen proposes a solution in which the vertical movement of the mowing beam is divided into two parts (as in Blakeslee), the mowing beam being attached in a pivoted manner to a sprung frame (as in Ermaco) and the sprung frame being supported in the carrier frame by means of a parallelogram suspension with rigid guide arms (as in Bucher-Guyer).

US patent 4 599 852 (Kerber et al., 1985) proposes yet another balancing system for a mowing unit, in which the mowing beam is similarly supported in a sprung manner relative to a cutting head (intermediate frame), to which it is connected by means of rigid guide arms in such manner that the mowing beam is free to pivot, relative to the frame, about an essentially horizontal shaft perpendicular to the direction of travel. Kerber et al. differs from the solutions described above in that it proposes leaf springs as the balancing device, the springs transferring part of the weight of the cutting beam to the frame.

EP 0 634 092 A1 (Freudendahl, 1993) proposes a solution which is generally similar to that proposed by Kerber et al., based on a mowing unit which is free to pivot about an essentially horizontal shaft perpendicular to the direction of travel. The difference is that Freudendahl, instead of the leaf springs used by Kerber et al. to balance the pivoting movements of the mowing head about this shaft, proposes an essentially horizontal tensile spring as the source of the turning moment about this same horizontal shaft. In Freudendahl, the mowing unit is attached to the frame by means of rigid guide arms as in Kerber et al. (see, for example, patent claim 1), while the weight of the mowing unit is supported mainly by essentially vertical springs fitted between the main frame and the guide arms, in such manner that these springs do not apply a turning moment to the mowing unit relative to the horizontal shaft.

The Finnish patent FI 101123 (Häggblom & Fagerholm) proposes yet another, further developed balancing system for a mowing machine, in which the mowing unit proper is mounted in the main frame by means of sprung guide arms and its weight is supported by at least four springs, in such manner that the balancing force of each spring is matched to the mass of the machine, and to the distance between the line of action of the spring and the centre of gravity of the machine.

All of these known solutions have, in their own ways, contributed to improving the conformity of the mowing unit to the ground during mowing, thereby increasing the capacity of the machine. However, all of them suffer from the disadvantage of being designed to balance only the static mass of the mowing unit, without allowing for the high dynamic reaction forces due to the driving torque of the conditioner and the acceleration of the crop as it is made to pass through the machine.

To illustrate this further, consider an example showing the magnitude of the reaction force caused by the driving torque of the rotor. If a typical mowing unit with a crushing rotor has a mass of 1,000 kg, which is statically balanced in such manner that it exerts a load of approximately 1,000 N (~ 10%) on the ground, distributed uniformly over 500 mm of the mowing beam in the direction of travel, this reaction force with the ground can withstand a maximum driving torque of the order of 1,000 N x 500/2 = 250 Nm without causing the machine to tip over on its nose or require stabiliser arms to be fitted between the mowing unit and main frame to counteract the driving torque. If the crushing rotor rotates at 1.000 r/min. this is equivalent to a rotor power of 26 kW. In heavy crops, most machines of this order of size require a higher crushing rotor power and, as a result, usually require stabiliser arms. High reaction forces in the stabiliser arms, in turn, give rise to friction forces and, as a result, a deterioration in the conformity of the mowing unit to the ground.

Another factor which increases the ground pressure of the mowing unit in operation is that the mass of grass conditioned by the crushing rotor is accelerated upward from the level of the cutting elements 5 to pass through the rotor. In the case of this dynamic force also, the heavier the crop and the higher the speed, the greater the reaction force and the power requirement of the rotor.

An arrangement for load-compensated balancing of a mowing machine has been developed to achieve ideal conformity with the ground. In this arrangement, the mowing unit is attached to the main frame by at least two essentially horizontal guide arms and is supported by at least three spring elements acting between the mowing unit and the carrier frame, at least one of which spring elements consists of a hydraulic or a pneumatic cylinder, enabling compensated for the additional loading to which the mowing unit is subjected to be applied steplessly during operation.

To achieve this ideal conformity with the ground, the invention is characterised by the features described in the patent claims below.

The main advantage of the invention is its ability to maintain a uniform ground pressure distribution over the entire support surface in contact with the ground, since the pressure in the hydraulic or pneumatic spring element (or elements) is matched to the machine's power requirement and, as a result, can counterbalance the reaction forces of the driving torque, thereby maintaining the distribution of the ground pressure on the underlying surface at a level which corresponds as well as possible to the distribution achievable by static adjustment of the balance.

The following description is of a preferred version of the invention based on the appended general drawings.
Fig. 1 shows a towed mowing conditioner in accordance with the invention, viewed from the front.
Fig. 2 shows a side view of the same mowing conditioner.

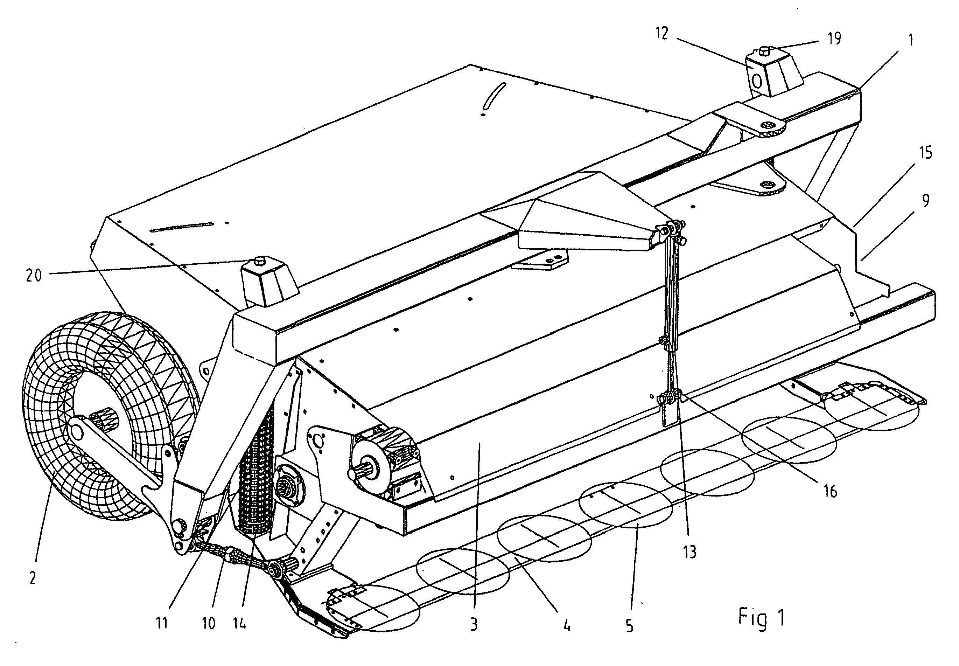

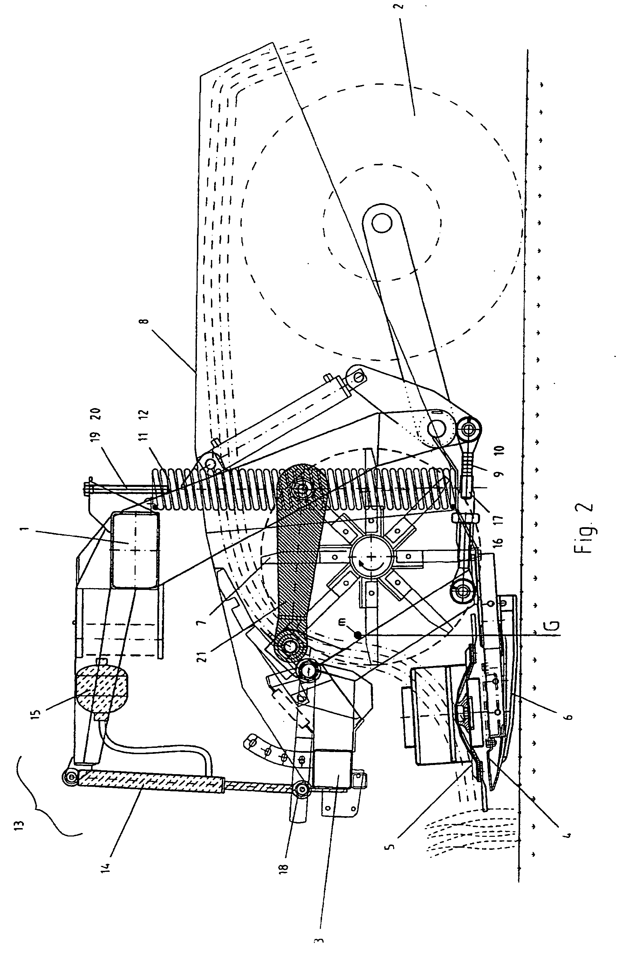

The machine shown in Figs. 1-2 consists of a main carrier frame 1 provided with driving wheels 2 and connected to a tractor, a mowing unit 3 attached to the frame 1, which unit consists of an existing mowing beam 4 arranged essentially perpendicular to the direction of travel and provided with cutting devices 5 and a slide plate (or plates) 6 supporting the unit on the ground, a rotary conditioner 7, guide plates 8 to guide the flow of material from the machine, guide arms 9 and 10 between the mowing unit 3 and the carrier frame 1 and, in an alternative version, a stabiliser arm 21.
The weight of the mowing unit 3 is supported largely by the spring elements 11, 12 and 13. The spring elements 11 and 12 consist of conventional tension springs provided with tensioning screws 19 and 20, while spring element 13 consists of a hydraulic cylinder 14 connected to a pressure accumulator 15. The lifting force of the spring element 13 can be varied by altering the quantity of oil enclosed in the pressure accumulator-cylinder hydraulic circuit.
The lower ends of the spring elements are attached to points 16, 17 and 18. As shown in Fig. 2, these are located on opposite sides of the centre of gravity, m, of the machine, relative to the direction of travel. Uniform distribution of the ground pressure under the mowing beam can be achieved by varying the ratio between the balancing forces of the spring elements or, if the machine is also equipped with a stabiliser arm 21 and, therefore, is provided with what is known as a parallelogram suspension, a situation established in which the horizontal forces in the guide arms are almost zero in the rest position. In this context, it is advantageous if the inclinations of the spring elements 11-13 relative to the vertical plane are inversely proportional to their main balancing forces, to prevent the horizontal vector sum of the balancing forces from exerting a negative effect on the forces in the guide arms 9, 10.

The balancing arrangement in accordance with the invention functions as follows:
During operation, the quantity of oil in the cylinder 14 and, as a result, the lifting force of that cylinder, is controlled in proportion to the driving speed of the machine and the weight of the conditioned crop. This control is optimum if it is automated so that the lifting force of the cylinder is directly proportional to the power demand of the machine. In less demanding applications, it is also possible to apply approximate manual control by means of an oil valve operated from the driver's seat.
Since load compensation of the mowing unit balance affords both the smallest and the most uniform possible ground pressure, the mowing unit is also afforded maximum freedom to follow the irregularities of the ground, which also reduces the quantity of ground impurities collected by the machine with the grass. This improves the quality of the forage and also reduces machine wear. As oil is transferred between the pressure accumulator 15 and the cylinder 14 during operation, the spring element 13 simultaneously acts as a shock absorber, reducing the risk of natural resonance in the mowing unit 3.

The invention is naturally not limited to the abovementioned preferred embodiment, a number of variations being possible within the framework of the patent claims below. Thus, for example, load compensation may also be achieved by replacing the hydraulic cylinder 14 and pressure accumulator 15 by a pneumatic cylinder or bellows. Similarly, the spring elements 11 and 12 may be replaced by hydropneumatic elements, provided that these are not supplied from the same pressure circuit as the spring element 13.

## Claims

1. An arrangement for load-compensated balancing of an agricultural mowing machine consisting of a mowing unit (3) equipped with a knife unit (5) and a conditioner (7), supported by a spring suspension in a carrier frame (1), in which the mowing unit is attached to the carrier frame (1) by at least two guide arms (9, 10) and is supported by at least three spring elements (11, 12, 13) acting between the mowing unit and the carrier frame; at least one first spring element (13) comprising a hydraulic cylinder (14), a pneumatic cylinder or a bellows being situated in front of a gravity centre (m) of the mowing unit (3), and at least one second spring element (11, 12) situated rear of the gravity centre (m) of the mowing unit in a direction of travel of the mowing machine, the first spring element (13) having means controlling the pressure and thus the lifting force thereof,
the pressure in the first spring element (13) is matched to the mowing machine's power requirement,
the lifting force applied by the first spring element (13) to the mowing unit (3) thus compensating a torque created around said gravity centre, as the knife unit (5) and the conditioner (7) lift and accelerate a crop in a front part of the mowing unit during a cutting and conditioning process thereof,
the first spring element (13) counterbalancing the reaction forces of the torque.

2. An arrangement according to claim 1, **characterized in that** the control of the first spring element (13) is automated with respect to the power requirement of the mowing machine.

3. An arrangement according to any of the claims 1, **characterized in that** the control of the first spring element (13) applied manually by means of an oil valve operated from the driver's seat.

4. An arrangement according to claim 1, 2 or 3, **characterized in that** the first spring element (13) or is arranged to act as a shock absorber, minimizing the tendency to natural resonance of the mowing unit (3).

5. An arrangement according to any preceding claim, **characterized in that** the spring elements (11, 12, 13) have an inclination relative the vertical plane being inversely proportional to the main lifting forces of the spring elements, such that the horizontal vector sum of the lifting forces is minimized.

6. An arrangement according to any preceding claim, **characterized in that** the mowing unit (3) is attached to the main frame (1) only by two guide arms (9, 10).

7. An arrangement according to any of the claims 1 - 5, **characterized in that** the mowing unit (3) is attached to the main frame (1) by two guide arms (9, 10) and also by at least one stabiliser arm (21).

8. An arrangement according to any preceding claim, **characterized in that** all spring elements (11, 12, 13) comprises hydropneumatic elements divided into at least two separate pressure circuits.

9. An arrangement according to any of the claims 1 - 7, **characterized in that** the spring elements (11, 12) are regulated so that the machine is also in balance about the centreline of the direction of travel.

10. An arrangement according to any preceding claim, **characterized in that** the carrier frame (1) is equipped with driving wheels (2) to maintain it at a practically constant height above the ground during mowing.

## Patentansprüche

1. Vorrichtung zum lastenkompensierten Ausgleichen einer landwirtschaftlichen Mähmaschine, bestehend aus einer Mäheinheit (3), die mit einer Messereinheit (5) und einer Fördereinrichtung (7) ausgestattet ist, die durch eine Federaufhängung in einem Trägerrahmen (1) gelagert sind, wobei die Mäheinheit am Trägerrahmen (1) durch wenigstens zwei Führungsarme (9, 10) angebracht und durch wenigstens drei Federelemente (11, 12, 13) gelagert ist, die zwischen der Mäheinheit und dem Trägerrahmen wirken; einem ersten Federelement (13) mit einem Hydraulikzylinder (14), einem pneumatischen Zylinder oder einem Balg, der vor einem Schwerpunkt (m) der Mäheinheit (3) angeordnet ist, und wenigstens einem zweiten Federelement (11, 12), das hinter dem Schwerpunkt (m) der Mäheinheit in einer Bewegungsrichtung der Mähmaschine befindet, wobei das erste Federelement (13) über eine Einrichtung verfügt, die den Druck und somit die Hebekraft desselben steuert,
der Druck im ersten Federelement (13) mit der Leistungsanforderung der Mähmaschine abgestimmt ist,
die Hebekraft, die durch das Federelement (13) auf die Mäheinheit (3) einwirkt, somit ein Drehmoment kompensiert, das um den Schwerpunkt erzeugt wird, wenn die Messereinheit (5) und die Fördereinrichtung (7) ein Schnittgut während eines Schnitt- und Fördervorgangs derselben anheben und beschleunigen,
und das erste Federelement (13) die Reaktionskräfte des Drehmomentes ausgleicht.

2. Vorrichtung nach Anspruch 1, **dadurch gekennzeichnet, dass** die Steuerung des ersten Federelementes (13) im Bezug auf die Leistungsanforderung der Mähmaschine automatisiert ist.

3. Vorrichtung nach einem der Ansprüche 1 oder 2, **dadurch gekennzeichnet, dass** die Steuerung des ersten Federelementes (13) manuell mit Hilfe eines Ölventils ausgeübt wird, das vom Fahrersitz aus bedient wird.

4. Vorrichtung nach Anspruch 1, 2 oder 3, **dadurch gekennzeichnet, dass** das erste Federelement (13) derart angeordnet ist, dass es als Stoßdämpfer wirkt, der die Neigung der Mäheinheit (3) zur Eigenschwingung minimiert.

5. Vorrichtung nach einem der vorhergehenden Ansprüche, **dadurch gekennzeichnet, dass** die Federelemente (11, 12, 13) eine Neigung relativ zur vertikalen Ebene haben, die umgekehrt proportional zu den Haupthebekräften der Federelemente ist, so dass die horizontale Vektorsumme der Hebekräfte minimiert wird.

6. Vorrichtung nach einem der vorhergehenden Ansprüche, **dadurch gekennzeichnet, dass** die Mäheinheit (3) am Hauptrahmen (1) lediglich durch zwei Führungsarme (9, 10) angebracht ist.

7. Vorrichtung nach einem der Ansprüche 1 bis 5, **dadurch gekennzeichnet, dass** die Mäheinheit (3) am Hauptrahmen (1) durch zwei Führungsarme (9, 10) und zudem durch wenigstens einen Stabilisierungsarm (21) angebracht ist.

8. Vorrichtung nach einem der vorhergehenden Ansprüche, **dadurch gekennzeichnet, dass** sämtliche Federelemente (11, 12, 13) hydropneumatische Elemente enthalten, die in wenigstens zwei separate Druckkreisläufe unterteilt sind.

9. Vorrichtung nach einem der Ansprüche 1 bis 7, **dadurch gekennzeichnet, dass** die Federelemente (11, 12) derart reguliert sind, dass sich die Maschine ebenfalls um die Mittenlinie der Bewegungsrichtung im Gleichgewicht befindet.

10. Vorrichtung nach einem der vorangehenden Ansprüche, **dadurch gekennzeichnet, dass** der Trägerrahmen (1) mit Antriebsrädem (2) ausgestattet ist, um ihn in einer praktisch konstanten Höhe über dem Erdboden während des Mähens zu halten.

## Revendications

1. Agencement pour équilibrage avec compensation de charge d'une faucheuse agricole comprenant une unité de fauchage (3) équipée d'une unité de couteaux (5) et d'un conditionneur (7), supportée par une suspension à ressort dans un cadre de support (1), dans lequel l'unité de fauchage est fixée au cadre de support (1) par au moins deux bras de guidage (9, 10) et est supportée par au moins trois éléments formant ressort (11, 12, 13) agissant entre l'unité de fauchage et le cadre de support ; au moins un premier élément formant ressort (13) comprenant un vérin hydraulique (14), un vérin pneumatique ou un soufflet situé face à un centre de gravité (m) de l'unité de fauchage (3), et au moins un second élément formant ressort (11, 12) situé à l'arrière du centre de gravité (m) de l'unité de fauchage dans une direction de déplacement de la faucheuse, le premier élément formant ressort (13) ayant des moyens contrôlant la pression et ainsi, la force de levage de celui-ci,
la pression dans le premier élément formant ressort (13) étant adaptée au besoin en énergie de la faucheuse,
la force de levage appliquée par le premier élément formant ressort (13) sur l'unité de fauchage (3) compensant ainsi un couple créé autour dudit centre de gravité, lorsque l'unité de couteaux (5) et le conditionneur (7) se soulèvent et accélèrent une récolte dans une partie avant de l'unité de fauchage pendant un processus de coupe et de conditionnement de celle-ci,
le premier élément formant ressort (13) contrebalançant les forces de réaction du couple.

2. Agencement selon la revendication 1, **caractérisé en ce que** le contrôle du premier élément formant ressort (13) est automatisé par rapport au besoin en énergie de la faucheuse.

3. Agencement selon l'une quelconque des revendications 1 et 2, **caractérisé en ce que** le contrôle du premier élément formant ressort (13) appliqué manuellement au moyen d'une soupape à huile actionnée depuis le siège conducteur.

4. Agencement selon la revendication 1, 2 ou 3, **caractérisé en ce que** le premier élément formant ressort (13) est agencé pour servir d'amortisseur, réduisant la tendance à la résonance naturelle de la faucheuse (3).

5. Agencement selon l'une quelconque des revendications précédentes, **caractérisé en ce que** les éléments formant ressort (11, 12, 13) ont une inclinaison par rapport au plan vertical inversement proportionnelle aux forces de levage principales des éléments formant ressort, de telle sorte que la somme vectorielle horizontale des forces de levage soit minimisée.

6. Agencement selon l'une quelconque des revendications précédentes, **caractérisé en ce que** l'unité de fauchage (3) est fixée au cadre principal (1) uniquement par deux bras de guidage (9, 10).

7. Agencement selon l'une quelconque des revendications 1 à 5, **caractérisé en ce que** l'unité de fauchage (3) est fixée au cadre principal (1) par deux bras de guidage (9, 10) et également, par au moins un bras stabilisateur (21).

8. Agencement selon l'une quelconque des revendications précédentes, **caractérisé en ce que** l'ensemble des éléments formant ressort (11, 12, 13) comprennent des éléments hydropneumatiques divisés en au moins deux circuits de pression distincts.

9. Agencement selon l'une quelconque des revendications 1 à 7, **caractérisé en ce que** les éléments formant ressort (11, 12) sont réglés de telle sorte que la machine soit également équilibrée au niveau de l'axe central de la direction de déplacement.

10. Agencement selon l'une quelconque des revendications précédentes, **caractérisé en ce que** le cadre de support (1) est équipé de roues motrices (2) pour le maintenir à une hauteur pratiquement constante au-dessus du sol pendant le fauchage.
